# EUROPEAN PATENT SPECIFICATION

(11) **EP 3 888 937 B1**
(45) Date of publication and mention of the grant of the patent: **07.05.2025**
(21) Application number: 19891634.8
(22) Date of filing: 13.11.2019
(51) Int. Cl.: B60C 7/14, B60C 7/00

(54) **NON-PNEUMATIC TIRE**
LUFTLOSER REIFEN
PNEU NON PNEUMATIQUE

(30) Priority: 30.11.2018 JP 2018224766
(43) Date of publication of application: 06.10.2021
(73) Proprietor: BRIDGESTONE CORPORATION, Chuo-ku Tokyo 104-8340 (JP)
(72) Inventor: ABE, Akihiko, Tokyo 104-8340 (JP)
(74) Representative: Marks & Clerk LLP
(86) International application number: PCT/JP2019/044500
(87) International publication number: WO 2020/110723

(56) References cited:
- EP-A1- 2 915 681
- WO-A1-2017/061405
- WO-A1-2018/092635
- WO-A1-2018/211734
- JP-A- 2014 083 915
- JP-A- 2014 189 095
- JP-A- 2016 107 751
- JP-A- 2017 081 199
- JP-A- 2018 506 464
- KR-A- 20180 025 728
- US-A1- 2018 222 254

## Description

### [Technical Field]

The present invention relates to a non-pneumatic tire. Priority is claimed on Japanese Patent Application No. 2018-224766, filed on November 30, 2018.

### [Background Art]

Conventionally, as shown in, for example, Patent Document 1, there is known a non-pneumatic tire including an inner cylinder that is attached to an axle, an outer cylinder that surrounds the inner cylinder from an outside in a tire radial direction and has a tread member mounted on an outer peripheral surface thereof, and a plurality of connecting members that connect an outer peripheral surface of the inner cylinder and an inner peripheral surface of the outer cylinder, in which the outer cylinder and the connecting members are formed to be elastically deformable.

According to Patent Document 2, a first point (P1) is set on an end edge on an outer end portion (15a) side of a coupling member (15) and a fifth point (P5) is set on an end edge on an inner end portion (15b) side of the coupling member (15), and a distance (H1) from the fifth point (P5) to the second point (P2) along a reference straight line (RL) passing through the first point (P1) and a tire axis is set to 0.80 times a reference distance (H) from the fifth point (P5) to the first point (P1) along the reference straight line, a distance (H2) from the fifth point (P5) to the third point along the reference straight line is set to 0.65 times the reference distance (H), and a distance (H3) from the fifth point (P5) to the fourth point (P4) along the reference straight line is set to 0.30 times the reference distance (H), the third point (P3) is disposed on the other side in the tire circumferential direction of an overall inclined straight line (SL) passing through the first point (P1) and the fifth point (P5), and a horizontal distance (D2) between the second point (P2) and the third point (P3) in a perpendicular direction (D) perpendicular to the reference straight line (RL) is larger than each of a horizontal distance D1 between the first point (P1) and the second point (P2) in the perpendicular direction (D) and a horizontal distance (D4) between the fourth point (P4) and the fifth point (P5) in the perpendicular direction (D).

Patent Document 3 discloses a non-pneumatic tire which comprises an internal band and an external band which are spaced from each other. The non-pneumatic tire comprises: a band unit having the internal band and the external band, wherein the external band is spaced from the internal band, and is provided to surround the outer circumferential surface of the internal band; and a spoke unit provided between the internal band and the external band.

### [Citation List]

### [Patent Document]

[Patent Document 1]
   Japanese Unexamined Patent Application, First Publication No. 2016-172522
[Patent Document 2]
   United Stated Patent Application Publication No. 2018/222254
[Patent Document 3]
   Korean Patent Application Publication No. 2018-0025728

### [Summary of Invention]

### [Technical Problem]

However, in the conventional non-pneumatic tire, the outer cylinder may be significantly deformed toward the inside in the tire radial direction when riding over a step such as a curb.

The present invention has been made in view of the above-described circumstances, and an object of the present invention is to provide a non-pneumatic tire capable of suppressing a large deformation of an outer cylinder toward the inside in a tire radial direction, without deteriorating the riding comfort.

### [Solution to Problem]

A non-pneumatic tire according to an aspect of the present invention is as defined in claim 1.

### [Advantageous Effects of Invention]

According to the present invention, it is possible to suppress a large deformation of an outer cylinder toward the inside in a tire radial direction without deteriorating the riding comfort.

### [Brief Description of Drawings]

Fig. 1 is a side view of a non-pneumatic tire according to an embodiment of the present invention.
Fig. 2 is a cross-sectional view taken along a line II-II of the non-pneumatic tire of Fig. 1.
Fig. 3 is an enlarged view of the connecting member shown in Fig. 1.
Fig. 4 is an enlarged side view showing a state in which the non-pneumatic tire shown in Figs. 1 to 3 is grounded to a flat ground plane.

### [Description of Embodiments]

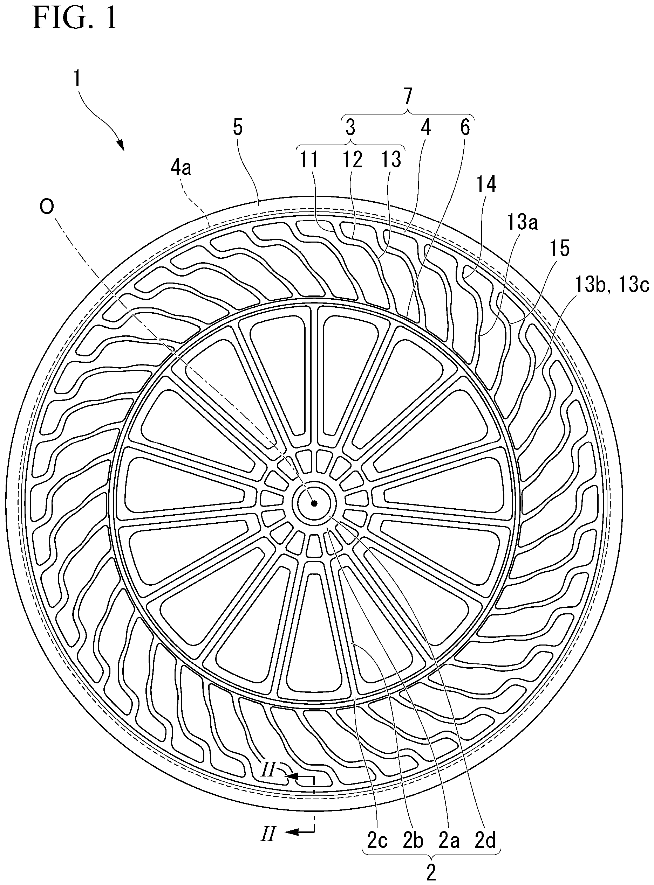

Hereinafter, configurations of the non-pneumatic tire according to the present embodiment will be described with reference to Figs. 1 to 4.

As shown in Fig. 1, the non-pneumatic tire 1 includes a wheel portion 2 attached to an axle, a tire portion 7 disposed on an outer periphery of the wheel portion 2, and a tread member 5 disposed on an outer periphery of the tire portion 7.

The non-pneumatic tire 1 of the present embodiment is used by being mounted on, for example, a bicycle, a two-wheeled vehicle, an automobile, a handle type electric wheelchair, or the like.

Here, the wheel portion 2 is formed in a disk shape, the tire portion 7 is formed in an annular shape, and each central axis is positioned on a common axis. The common axis is referred to as a central axis O, and a direction along the central axis O is called a tire width direction. In addition, when viewed from the tire width direction, a direction orbiting around the central axis O is referred to as a tire circumferential direction, and a direction intersecting the central axis O is referred to as a tire radial direction.

The center portion of each of the wheel portion 2, the tire portion 7, and the tread member 5 in the tire width direction coincide with each other. In a cross-sectional view along both directions in the tire width direction and the tire radial direction, the wheel portion 2, the tire portion 7, and the tread member 5 exhibit, as a whole, a line symmetrical shape with a straight line passing through the center portion (tire equator part) in the tire width direction as a reference.

The wheel portion 2 includes a cylindrical boss 2d extending in the tire width direction with the central axis O as a center, a mounting cylinder portion 2a fixed to an outer peripheral surface of the boss 2d, an exterior cylinder portion 2c surrounding the mounting cylinder portion 2a from an outside in the tire radial direction, and a plurality of ribs 2b connecting the mounting cylinder portion 2a and the exterior cylinder portion 2c to each other.

Each of the mounting cylinder portion 2a and the exterior cylinder portion 2c are disposed coaxially with the boss 2d. The plurality of ribs 2b are disposed at equal intervals in the tire circumferential direction, for example. Each of the plurality of ribs 2b extends radially with the boss 2d as a center.

In the present embodiment, the mounting cylinder portion 2a, the plurality of ribs 2b, and the exterior cylinder portion 2c are integrally formed of a thermoplastic resin. As a result, the wheel portion 2 can be formed by insert molding using the boss 2d as an insert product, and is suitable for mass production.

Each of the boss 2d, the mounting cylinder portion 2a, the plurality of ribs 2b, and the exterior cylinder portion 2c may be separately formed. In addition, the mounting cylinder portion 2a, the plurality of ribs 2b, and the exterior cylinder portion 2c may be formed of a material other than the thermoplastic resin.

The tire portion 7 includes an inner cylinder 6 that is externally fitted to the exterior cylinder portion 2c of the wheel portion 2, an outer cylinder 4 that surrounds the inner cylinder 6 from the outside in the tire radial direction and has a tread member 5 mounted on an outer peripheral surface thereof, and a plurality of connecting members 3 that connect the outer peripheral surface of the inner cylinder 6 and the inner peripheral surface of the outer cylinder 4 and are arranged at intervals in the tire circumferential direction. An elastic modulus of a material forming the tire portion 7 is, for example, 300 MPa or more and 1500 MPa or less.

The inner cylinder 6 is attached to the axle via the wheel portion 2. The central axes of the inner cylinder 6 and the outer cylinder 4 are disposed coaxially with the central axis O. The center portion in the tire width direction of each of the inner cylinder 6, the connecting members 3, and the outer cylinder 4 is disposed in coincidence with each other.

In the present embodiment, the inner cylinder 6, the connecting members 3, and the outer cylinder 4 are integrally formed of the thermoplastic resin. As a result, the tire portion 7 can be formed by injection molding and is suitable for mass production. The thermoplastic resin may be, for example, only one kind of resin or a mixture containing two or more kinds of resins, or a mixture containing one or more kinds of resins and one or more kinds of elastomers, and may further include, for example, additives such as anti-aging agents, plasticizers, fillers, or pigments.

The inner cylinder 6, the connecting members 3, and the outer cylinder 4 may be separately formed. The inner cylinder 6, the connecting members 3, and the outer cylinder 4 may be formed of a material other than the thermoplastic resin.

The tire portion 7 and the wheel portion 2 may be integrally formed or may be separately formed. The wheel portion 2 has a function of connecting the axle and the tire portion 7, and the tire portion 7 has a function of absorbing vibration transmitted from the ground to the axle. As described above, since the wheel portion 2 and the tire portion 7 have different functions, they may be formed of different materials. For example, the tire portion 7 is formed of a material having a relatively small elastic modulus to secure vibration absorption performance, and the wheel portion 2 may be formed of a material having a larger elastic modulus than the tire portion 7 to secure robustness. In addition, for example, the wheel portion 2 may be formed of a material having a relatively small specific gravity to reduce the weight of the whole non-pneumatic tire 1.

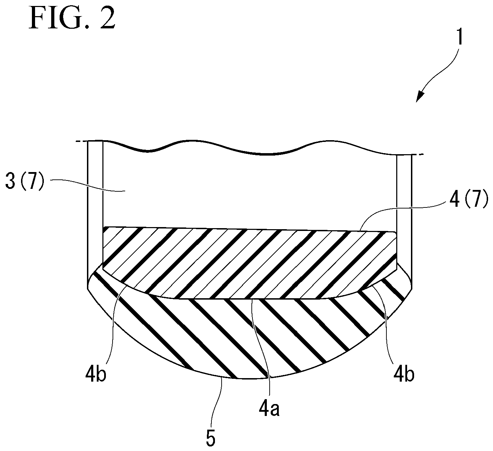

The tread member 5 is formed in a tubular shape extending in the tire width direction with the central axis O as a center. The tread member 5 is externally fitted to the outer cylinder 4 formed to be elastically deformable. As shown in Fig. 2, the tread member 5 covers not only the outer peripheral surface of the outer cylinder 4 but also an outer end portion in the tire radial direction of the outer cylinder 4 of side surfaces of the outer cylinder 4 facing the tire width direction. The elastic modulus of the material forming the tread member 5 is smaller than the elastic modulus of the material forming the tire portion 7. As shown in Fig. 2, the outer peripheral surface of the tread member 5 exhibits a curved shape which protrudes toward the outside in the tire radial direction in the cross-sectional view taken along a line II-II in Fig. 1, that is, in the longitudinal sectional view along both directions of the tire width direction and the tire radial direction.

The tread member 5 is formed of, for example, natural rubber and/or vulcanized rubber obtained by vulcanizing a rubber composition, a thermoplastic material, or the like. From the viewpoint of wear resistance, it is preferable to form the tread member 5 with the vulcanized rubber. Examples of the thermoplastic material include a thermoplastic elastomer and a thermoplastic resin.
Examples of the thermoplastic elastomer include an amide thermoplastic elastomer (TPA), an ester thermoplastic elastomer (TPC), an olefin thermoplastic elastomer (TPO), a styrene thermoplastic elastomer (TPS), a urethane thermoplastic elastomer (TPU), a thermoplastic rubber cross-linked body (TPV), or other thermoplastic elastomer (TPZ) as defined in JIS K 6418.

Examples of the thermoplastic resin include a urethane resin, an olefin resin, a vinyl chloride resin, a polyamide resin, and the like.

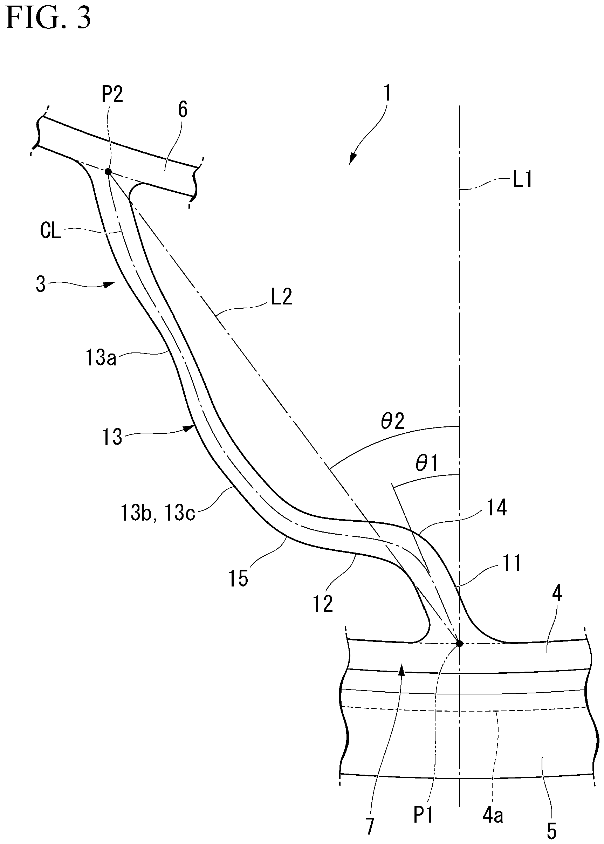

As shown in Figs. 1 and 3, the connecting member 3 is formed in a rectangular plate shape that is curved as a whole, and the front and back surfaces face the tire circumferential direction or the tire radial direction, and the side surfaces face the tire width direction. The connecting member 3 is formed of a material that is capable of elastic deformation, and connects the outer peripheral surface of the inner cylinder 6 and the inner peripheral surface of the outer cylinder 4 so as to be relatively elastically displaceable. A plurality of connecting members 3 are disposed at equal intervals in the tire circumferential direction.

The connecting member 3 includes a vertical base portion 11, a horizontal base portion 12, and an inclined portion 13.

The vertical base portion 11 extends toward the inside in the tire radial direction from the inner peripheral surface of the outer cylinder 4. The front and back surfaces of the vertical base portion 11 face the tire circumferential direction. The whole front and back surfaces of the vertical base portion 11 except for the connection part with the outer cylinder 4 extend linearly in the side view from the tire width direction. In the side view, the front and back surfaces of the vertical base portion 11 at the connection part with the outer cylinder 4 gradually extend in a direction apart from each other toward the outside in the tire radial direction, and exhibit a curved shape recessed in the tire circumferential direction.

When viewed from the tire width direction, the central line CL of the vertical base portion 11 is slightly inclined toward one side in the tire circumferential direction with respect to a straight line L1 passing through the central axis O and an outer end edge P1 in the tire radial direction of a central line CL passing through the center portion in the thickness direction of the vertical base portion 11. An inclination angle θ1 is, for example, 25° or less. The central line CL of the vertical base portion 11 may coincide with the straight line L1.

The thickness of the vertical base portion 11 in the tire circumferential direction is the same over an entire length in the tire radial direction except for the connection part with the outer cylinder 4. The thickness of the vertical base portion 11 is thickest in the connecting member 3.

Here, the thickness of the vertical base portion 11 means the thickness of a part of the vertical base portion 11 which is positioned inside in the tire radial direction from a connection part with the outer cylinder 4 and has the front and back surfaces extending linearly in a side view viewed from the tire width direction, and for example, the thickness means the average value of the thickness when the thickness of the part is different for each position in the tire radial direction.

The horizontal base portion 12 extends from the inner end portion in the tire radial direction of the vertical base portion 11 toward one side in the tire circumferential direction along the tire circumferential direction. The front and back surfaces of the horizontal base portion 12 face in the tire radial direction. The horizontal base portion 12 extends linearly in a side view seen from the tire width direction. In the horizontal base portion 12, when viewed from the tire width direction, at least one of the central line CL passing through the center portion in the thickness direction, a surface facing inside in the tire radial direction, and a surface facing outside in the tire radial direction extend along the tire circumferential direction. In the shown example, in the front and back surfaces of the horizontal base portion 12, the surface facing inside in the tire radial direction extends along the tire circumferential direction, and the surface facing outside in the tire radial direction gradually extends toward the inside in the tire radial direction toward one side in the tire circumferential direction. The thickness of the horizontal base portion 12 in the tire radial direction gradually decreases from the other side in the tire circumferential direction toward one side. The length of the horizontal base portion 12 is the same as the length of the vertical base portion 11.

The connection part (hereinafter, referred to as the first connection part) 14 between the horizontal base portion 12 and the vertical base portion 11 is curved so as to protrude toward the other side in the tire circumferential direction.

The inclined portion 13 gradually extends toward one side in the tire circumferential direction from an end portion on one side in the tire circumferential direction of the horizontal base portion 12 toward the inside in the tire radial direction, and is connected to the outer peripheral surface of the inner cylinder 6.

The connection part (hereinafter, referred to as the second connection part) 15 between the inclined portion 13 and the horizontal base portion 12 is curved so as to protrude toward the one side in the tire circumferential direction. The radius of curvature of the second connection part 15 is larger than the radius of curvature of the first connection part 14 when viewed from the tire width direction.

When viewed from the tire width direction, an inclination angle θ2 toward one side in the tire circumferential direction with respect to the straight line L1 of a straight line L2 connecting an inner end edge P2 in the tire radial direction of the central line CL passing through a center portion in the thickness direction of the inclined portion 13 and the outer end edge P1 in the tire radial direction of the central line CL passing through a center portion in the thickness direction of the vertical base portion 11 is larger than the inclination angle θ1 and is 32° or more and 45° or less.

When viewed from the tire width direction, the whole of the central line CL of the vertical base portion 11 except for the outer end edge P1 in the tire radial direction is positioned on the other side in the tire circumferential direction from the straight line L2, and the whole of the central line CL of the inclined portion 13 except for the inner end edge P2 in the tire radial direction is positioned on one side in the tire circumferential direction from the straight line L2.

When viewed from the tire width direction, the length of the inclined portion 13 is longer than the lengths of the vertical base portion 11 and the horizontal base portion 12. When viewed from the tire width direction, the length of the inclined portion 13 is, for example, about three times the length of each of the vertical base portion 11 and the horizontal base portion 12.

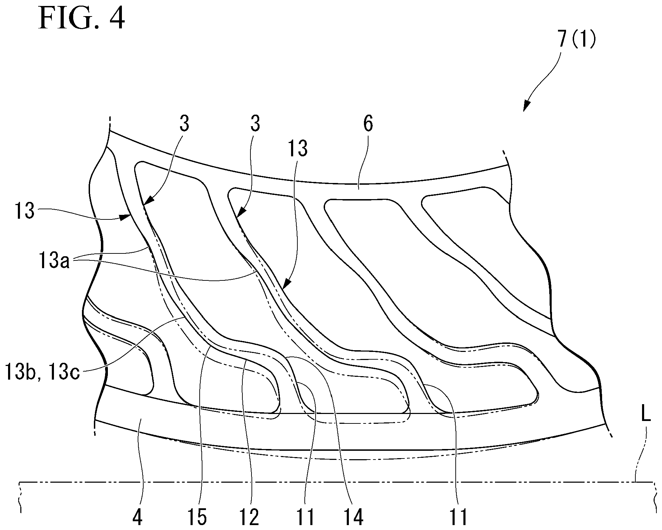

The thickness of the inclined portion 13 is thinner than the thickness of each of the vertical base portion 11 and the horizontal base portion 12. As shown in Fig. 4, when the non-pneumatic tire 1 is grounded to the ground plane L, in the inclined portion 13 of the connecting member 3 where the vertical base portion 11 is positioned between the ground plane L and the inner cylinder 6, the thickness of a part (hereinafter referred to as minimum stress part) 13a in which the minimum stress is generated, is thinner than the thickness of the other parts. The minimum stress part 13a is curved so as to protrude toward the other side in the tire circumferential direction. The minimum stress part 13a is positioned in a central region of the inclined portion 13 in the tire radial direction. In the shown example, the minimum stress part 13a is positioned inside in the tire radial direction from the center portion in the tire radial direction between the inner cylinder 6 and the outer cylinder 4. When the non-pneumatic tire 1 is grounded to the ground plane L, the stress generated in the minimum stress part 13a as described above becomes the minimum in the connecting member 3.

In the inclined portion 13, a surface (hereinafter referred to as an abutment surface) 13b facing one side in the tire circumferential direction in the outer part 13c positioned outside the central region in the tire radial direction is gradually extended linearly toward one side in the tire circumferential direction from the outside toward the inside in the tire radial direction when viewed from the tire width direction. At least the outer part 13c in the tire radial direction of the inclined portion 13 is positioned outside in the tire radial direction from the center portion in the tire radial direction between the inner cylinder 6 and the outer cylinder 4.

In the shown example, the whole of the outer part 13c of the connecting member 3 is positioned outside in the tire radial direction from the center portion in the tire radial direction between the inner cylinder 6 and the outer cylinder 4.

In the outer part 13c of the connecting member 3, for example, only the outer end portion in the tire radial direction may be positioned outside in the tire radial direction from the center portion in the tire radial direction between the inner cylinder 6 and the outer cylinder 4, or the whole of outer part 13c of the connecting member 3 may be positioned inside in the tire radial direction from the center portion in the tire radial direction between the inner cylinder 6 and the outer cylinder 4.

When viewed from the tire width direction, a center portion of the abutment surface 13b of the inclined portion 13 in the other connecting member 3 positioned on the other side in the tire circumferential direction of the connecting members 3 adjacent in the tire circumferential direction, and a top portion of the first connection part 14 in the one connecting member 3 positioned on one side in the tire circumferential direction face each other in a direction orthogonal to the abutment surface 13b. A gap between the connecting members 3 adjacent in the tire circumferential direction is minimized between the center portion of the abutment surface 13b of the inclined portion 13 of the other connecting member 3 and the top portion of the first connection part 14 of the one connecting member 3.

When viewed from the tire width direction, the gap between the vertical base portions 11 adjacent in the tire circumferential direction is wider than the gap between the inclined portions 13 adjacent in the tire circumferential direction.

As shown in Fig. 2, in the cross-sectional view along both directions of the tire width direction and the tire radial direction, in the outer peripheral surface of the outer cylinder 4, the center portion 4a in the tire width direction extends straight in the tire width direction, and both end portions 4b in the tire width direction extend gradually toward the inside in the tire radial direction toward the outside in the tire width direction. The thickest part of the outer cylinders 4 is the center portion 4a in the tire width direction.

The thickness of the center portion 4a of the outer cylinder 4 in the tire width direction is thicker than the thickness of the vertical base portion 11 which has the thickest thickness in the connecting member 3. The thickness of the center portion 4a of the outer cylinder 4 in the tire width direction is 1.1 to 3.0 times the thickness of the vertical base portion 11.

As described above, with the non-pneumatic tire 1 according to the present embodiment, since the thickness of the center portion 4a in the tire width direction, which has the thickest thickness in the outer cylinder 4, is larger than the thickness of the vertical base portion 11, which has the thickest thickness in the connecting member 3, the rigidity of the outer cylinder 4 can be secured, and when the non-pneumatic tire 1 rides over a step such as a curb, the large deformation of the outer cylinder 4 toward the inside in the tire radial direction can be suppressed.

The thickness of the inclined portion 13 is thinner than the thicknesses of each of the vertical base portion 11 and the horizontal base portion 12, and the length of the inclined portion 13 is longer than the length of each of the vertical base portion 11 and the horizontal base portion 12 when viewed from the tire width direction. That is, since the length of the inclined portion 13, which has the thinnest thickness in the connecting member 3, is the longest, the bending rigidity of the inclined portion 13 is reliably reduced, and the connecting member 3 can be easily elastically deformed when the non-pneumatic tire 1 is grounded, and the riding comfort can be secured.

Moreover, since the inclined portion 13 is arranged at a position where the outer end portion in the tire radial direction where the stress is most concentrated when the non-pneumatic tire 1 is grounded is avoided in the connecting member 3, the deterioration of durability can be prevented.

Since the horizontal base portion 12 extends along the tire circumferential direction, for example, the length of the inclined portion 13 viewed from the tire width direction can be easily secured as compared with the configuration in which the horizontal base portion 12 extends from the vertical base portion 11 toward the inside in the tire radial direction, and the outer part 13c in the tire radial direction of the inclined portion 13 can be easily deflected and deformed toward one side in the tire circumferential direction when the non-pneumatic tire 1 is grounded, and thus the riding comfort can be reliably secured.

As shown in Fig. 4, when the non-pneumatic tire 1 is grounded to the ground plane L, in the inclined portion 13 of the connecting member 3 where the vertical base portion 11 is positioned between the ground plane L and the inner cylinder 6, since the thickness of the minimum stress part 13a, in which the minimum stress is generated, is thinner than the thickness of the other parts, the bending rigidity of the inclined portion 13 can be more reliably reduced while suppressing the deterioration of durability.

Since the thickness of the center portion 4a in the tire width direction, which has the thickest thickness of the outer cylinder 4, is 1.1 to 3.0 times the thickness of the vertical base portion 11, the rigidity of the outer cylinder 4 can be reliably secured while suppressing an increase in weight.

Since the inclination angle θ2 is 32° or more and 45° or less, it is possible to reliably suppress the deterioration of riding comfort while suppressing the increase in weight.

When the inclination angle θ2 is less than 32°, the connecting member 3 cannot be easily elastically deformed when the non-pneumatic tire 1 is grounded, and when the inclination angle θ2 is more than 45°, the connecting member 3 becomes too long to be excessively elastically deformed and the weight thereof also increases.

The technical scope of the present invention is not limited to the above-described embodiment, and various modifications can be made without departing from the scope of the present invention.

In the above embodiment, a configuration in which the non-pneumatic tire 1 includes the wheel portion 2 and the tread member 5 is shown, but a configuration in which the non-pneumatic tire 1 may be configured to include only the tire portion 7 without the wheel portion 2 and the tread member 5 may be employed.

In the embodiment described above, a configuration in which the thickness of the minimum stress part 13a of the inclined portion 13 is thinner than the thickness of the other parts is shown, but the present invention is not limited to this, and the thickness of the whole inclined portion 13 including the minimum stress part 13a may be suitably changed to be equal, for example.

In the above embodiment, the minimum stress part 13a is curved so as to protrude toward the other side in the tire circumferential direction, but the present invention is not limited to this, and it may be curved so as to protrude toward one side in the tire circumferential direction, or it may be appropriately changed such that the minimum stress part 13a is not curved but is simply recessed in the tire circumferential direction.

In the above embodiment, a configuration in which the thickest part of the outer cylinder 4 is the center portion 4a in the tire width direction is shown, but the present invention is not limited to this, and may be suitably changed, for example, to the end portion 4b in the tire width direction.

In the above embodiment, the thickness of the vertical base portion 11 is made to be thickest in the connecting member 3, but instead, for example, the thickness of the horizontal base portion 12, the first connection part 14, or the second connection part 15 may be made to be thickest in the connecting member 3.

In addition, it is possible to replace the components in the above-described embodiment with known components without departing from the scope of the present invention, and the above-described modification examples may be combined appropriately.

According to the present invention, since the thickness of the thickest part of the outer cylinder is thicker than the thickness of the thickest part of the connecting member, the rigidity of the outer cylinder can be secured, and when the non-pneumatic tire rides over a step such as a curb, the large deformation of the outer cylinder toward the inside in the tire radial direction can be suppressed.

The thickness of the inclined portion is thinner than the thicknesses of each of the vertical base portion and the horizontal base portion, and the length of the inclined portion is longer than the length of each of the vertical base portion and the horizontal base portion when viewed from the tire width direction. That is, in the connecting member, since the length of the thinnest inclined portion is the longest, the bending rigidity of the inclined portion is reliably reduced, and the connecting member can be easily elastically deformed when the non-pneumatic tire is grounded, and the riding comfort can be secured.

Moreover, since the inclined portion is arranged at a position where the outer end portion in the tire radial direction where the stress is most concentrated when the non-pneumatic tire is grounded is avoided in the connecting member, the deterioration of durability can be prevented.

Since the horizontal base portion extends along the tire circumferential direction, for example, the length of the inclined portion viewed from the tire width direction can be easily secured as compared with the configuration in which the horizontal base portion extends from the vertical base portion toward the inside in the tire radial direction, and the outer part in the tire radial direction of the inclined portion can be easily deflected and deformed toward one side in the tire circumferential direction when the non-pneumatic tire is grounded, and thus the riding comfort can be reliably secured.

Here, when the non-pneumatic tire is grounded to the ground plane, in the inclined portion of the connecting member where the vertical base portion is positioned between the ground plane and the inner cylinder, the thickness of a part, in which the minimum stress is generated, may be thinner than the thickness of the other parts.

In this case, when the non-pneumatic tire is grounded to the ground plane, in the inclined portion of the connecting member where the vertical base portion is positioned between the ground plane and the inner cylinder, since the thickness of the part, in which the minimum stress is generated, is thinner than the thickness of the other parts, the bending rigidity of the inclined portion can be more reliably reduced while suppressing the deterioration of durability.

In addition, the thickness of the vertical base portion may be the thickest in the connecting member, and the thickness of the thickest part in the outer cylinder may be 1.1 to 3.0 times the thickness of the vertical base portion.

In this case, since the thickness of the part, which has the thickest thickness in the outer cylinder, is 1.1 to 3.0 times the thickness of the vertical base portion, the rigidity of the outer cylinder can be reliably secured while suppressing an increase in weight.

### [Industrial Applicability]

By applying the non-pneumatic tire of the present invention to the field, it is possible to suppress a large deformation of an outer cylinder toward the inside in a tire radial direction without deteriorating the riding comfort.

### [Reference Signs List]

1: Non-pneumatic tire
3: Connecting member
4: Outer cylinder
5: Tread member
6: Inner cylinder
11: Vertical base portion
12: Horizontal base portion
13: Inclined portion
13a: Minimum stress part
L: Ground plane

## Claims

1. A non-pneumatic tire (1) comprising:
an inner cylinder (6) that is attachable to an axle;
an outer cylinder (4) that surrounds the inner cylinder (6) from an outside in a tire radial direction and has a tread member (5) mounted on an outer peripheral surface thereof; and
a plurality of connecting members (3) disposed at equal intervals in the tire circumferential direction that connect an outer peripheral surface of the inner cylinder (6) and an inner peripheral surface of the outer cylinder (4), wherein
the outer cylinder (4) and the connecting member (3) are formed to be elastically deformable,
a thickness of a thickest part (4a) of the outer cylinder (4) is thicker than a thickness of a thickest part of each of the plurality of connecting members (3),,
each of the plurality of connecting members (3), includes
a vertical base portion (11) that extends toward an inside in the tire radial direction from the inner peripheral surface of the outer cylinder (4),
a horizontal base portion (12) that extends along a tire circumferential direction from an inner end portion in the tire radial direction of the vertical base portion (11) toward a first side in the tire circumferential direction, and
an inclined portion (13) that gradually extends toward the first side in the tire circumferential direction from an end portion on the first side in the tire circumferential direction of the horizontal base portion (12) toward the inside in the tire radial direction and is connected to the outer peripheral surface of the inner cylinder (6),
each of the connecting members (3) is:
formed in a rectangular plate shape that is curved as a whole, and the front and back surfaces face the tire circumferential direction or the tire radial direction, and the side surfaces face the tire width direction, and
formed of a material that is capable of elastic deformation, and connects the outer peripheral surface of the inner cylinder (6) and the inner peripheral surface of the outer cylinder (4) so as to be relatively elastically displaceable,
the front and back surfaces of the vertical base portion (11) face the tire circumferential direction,
in the side view, the front and back surfaces of the vertical base portions (11) at the connection part with the outer cylinder (4) gradually extend in a direction apart from each other toward the outside in the tire radial direction, and exhibit a curved shape recessed in the tire circumferential direction,
the thickness of the vertical base portion (11) in the tire circumferential direction is the same over an entire length in the tire radial direction except for the connection part with the outer cylinder (4),
the thickness of the vertical base portion (11) is thickest in the connecting member (3), wherein the thickness of the vertical base portion (11) means the thickness of a part of the vertical base portion (11) which is positioned inside in the tire radial direction from a connection part with the outer cylinder (4) and has the front and back surfaces extending linearly in a side view viewed from the tire width direction,
the front and back surfaces of the horizontal base portion (12) face in the tire radial direction,
the thickness of the horizontal base portion (12) in the tire radial direction gradually decreases from a second side in the tire circumferential direction toward the first side in the tire circumferential direction,
when viewed from the tire width direction, an inclination angle (θ2) toward the first side in the tire circumferential direction with respect to the straight line (L1) of a straight line (L2) connecting an inner edge (P2) in the tire radial direction of the central line (CL) passing through a center portion in the thickness direction of the inclined portion (13) and the outer end edge (P1) in tire radial direction of the central line (CL) passing through a center portion in the thickness direction of the vertical base portion (11) is larger than the inclination angle (θ1) and is 32° or more and 45° or less,
when viewed from the tire width direction, the whole of the central line (CL) of the vertical base portion (11) except for the outer end edge (P1) in the tire radial direction is positioned on the second side in the tire circumferential direction from the straight line (L2), and the whole of the central line (CL) of the inclined portion (13) except for the inner end edge (P2) in the tire radial direction is positioned on the first side in the tire circumferential direction from the straight line (L2),
when the non-pneumatic tire (1) is grounded to the ground plane (L), in the inclined portion (13) of the connecting member (3) where the vertical base portion (11) is positioned between the ground plane (L) and the inner cylinder (6), the thickness of a minimum stress part (13a) in which the minimum stress is generated, is thinner than the thickness of the other parts,
the minimum stress part (13a) is curved so as to protrude toward the second side in the tire circumferential direction,
the minimum stress part (13a) is positioned in a central region of the inclined portion (13) in the tire radial direction,
in the inclined portion (13), an abutment surface (13b) facing the first side in the tire circumferential direction in the outer part (13c) positioned outside the central region in the tire radial direction is gradually extended linearly toward the first side in tire circumferential direction from the outside toward the inside in the tire radial direction when viewed from the tire width direction,
at least the outer part (13c) in the tire radial direction of the inclined portions (13) is positioned outside in the tire radial direction from the center portion in the tire radial direction between the inner cylinder (6) and the outer cylinder (4),
when viewed from the tire width direction, a center portion of the abutment surface (13b) of the inclined portion (13) in the other connecting member (3) positioned on the second side in the tire circumferential direction among the connecting members (3) adjacent in the tire circumferential direction, and a top portion of the first connection part (14) in the one connecting member (3) positioned on the first side in the tire circumferential direction face each other in a direction orthogonal to the abutment surface (13b),
a gap between the connecting members (3) adjacent in the tire circumferential direction is minimized between the center portion of the abutment surface (13b) of the inclined portion (13) of the other connecting member (3) and the top portion of the first connection part (14) of the one connecting member (3),
when viewed from the tire width direction, the gap between the vertical base portions (11) adjacent in the tire circumferential direction is wider than the gap between the inclined portions (13) adjacent in the tire circumferential direction),
a first connection part (14) which is a connection part between the horizontal base portion (12) and the vertical base portion (11) and which is curved so as to protrude toward the other side in the tire circumferential direction,
a second connection part (15) which is a connection part between the inclined portion (13) and the horizontal base portion (12) and which is curved so as to protrude toward the first side in the tire circumferential direction,
a thickness of the inclined portion (13) is thinner than a thickness of each of the vertical base portion (11) and the horizontal base portion (12), and
a length of the inclined portion (13) is longer than a length of each of the vertical base portion (11) and the length of the horizontal base portion (12) when viewed from the tire width direction,
**characterized in that**
the horizontal base portion (12) extends linearly in a side view seen from the tire width direction,
the length of the horizontal base portion (12) is the same as the length of the vertical base portion (11),
when viewed from the tire width direction, a central line (CL) of the vertical base portion (11) passing through a center portion in a thickness direction of the vertical base portion (11) is inclined by 25° or less toward the first side in the tire circumferential direction with respect to a straight line (L1) passing through a central axis (O) of the tire (1) and an outer end edge (P1) in the tire radial direction of the central line (CL),
the whole front and back surfaces of the vertical base portion (11) except for a connection part with the outer cylinder (4) extend linearly in a side view from the tire width direction,
the radius of curvature of the second connection part (15) is larger than the radius of curvature of the first connection part (14) when viewed from the tire width direction, and **in that**
in the horizontal base portion (12), when viewed from the tire width direction, at least one of the central line (CL) passing through the center portion in the thickness direction, a surface facing inside in the tire radial direction, and a surface facing outside in the tire radial direction extend along the tire circumferential direction.

2. The non-pneumatic tire (1) according to Claim 1, wherein
the thickness of the thickest part (4a) of the outer cylinder (4) is 1.1 to 3.0 times the thickness of the vertical base portion (11).

## Patentansprüche

1. Luftloser Reifen (1), der Folgendes umfasst:
einen inneren Zylinder (6), der an einer Achse angebracht werden kann,
einen äußeren Zylinder (4), der den inneren Zylinder (6) von einer in einer Reifenradialrichtung äußeren Seite aus umgibt und ein Laufflächenelement (5) aufweist, das an einer äußeren Umfangsfläche desselben montiert ist, und
eine Vielzahl von in gleichen Abständen in der Reifenumfangsrichtung angeordneten Verbindungselementen (3), die eine äußere Umfangsfläche des inneren Zylinders (6) und eine innere Umfangsfläche des äußeren Zylinders (4) verbinden, wobei
der äußere Zylinder (4) und die Verbindungselemente (3) so geformt sind, dass sie elastisch verformbar sind,
eine Dicke eines dicksten Teils (4a) des äußeren Zylinders (4) dicker ist als eine Dicke eines dicksten Teils jedes von der Vielzahl von Verbindungselementen (3),
jedes von der Vielzahl von Verbindungselementen (3) Folgendes einschließt:
einen vertikalen Basisabschnitt (11), der sich von der inneren Umfangsfläche des äußeren Zylinders (4) aus hin zu einer in der Reifenradialrichtung inneren Seite erstreckt,
einen horizontalen Basisabschnitt (12), der sich entlang einer Reifenumfangsrichtung von einem in der Reifenradialrichtung inneren Endabschnitt des vertikalen Basisabschnitts (11) aus hin zu einer in der Reifenumfangsrichtung ersten Seite erstreckt, und
einen geneigten Abschnitt (13), der sich allmählich hin zu der in der Reifenumfangsrichtung ersten Seite von einem Endabschnitt des horizontalen Basisabschnitts (12) auf der in der Reifenumfangsrichtung ersten Seite aus hin zu der in der Reifenradialrichtung inneren Seite erstreckt und mit der äußeren Umfangsfläche des inneren Zylinders (6) verbunden ist,
jedes der Verbindungselemente (3) Folgendes ist:
in einer rechteckigen Plattengestalt geformt, die als ein Ganzes gekrümmt ist, und die vordere und die hintere Fläche in die Reifenumfangsrichtung oder die Reifenradialrichtung zeigen, und die Seitenflächen in die Reifenbreitenrichtung zeigen, und
aus einem Material geformt, das zu elastischer Verformung in der Lage ist, und die äußere Umfangsfläche des inneren Zylinders (6) und die innere Umfangsfläche des äußeren Zylinders (4) verbindet, so dass sie relativ elastisch verschiebbar sind,
die vordere und die hintere Fläche des vertikalen Basisabschnitts (11) in die Reifenumfangsrichtung zeigen,
in der Seitenansicht sich die vorderen und die hinteren Flächen der vertikalen Basisabschnitte (11) an dem Verbindungsteil mit dem äußeren Zylinder (4) allmählich in einer Richtung voneinander weg hin zu der in der Reifenradialrichtung äußeren Seite erstrecken und eine gekrümmte Gestalt aufweisen, die in der Reifenumfangsrichtung ausgespart ist,
die Dicke des vertikalen Basisabschnitts (11) in der Reifenumfangsrichtung über eine gesamte Länge in der Reifenradialrichtung dieselbe ist, mit Ausnahme des Verbindungsteils mit dem äußeren Zylinder (4),
die Dicke des vertikalen Basisabschnitts (11) in dem Verbindungselement (3) am dicksten ist, wobei die Dicke des vertikalen Basisabschnitts (11) die Dicke eines Teils des vertikalen Basisabschnitts (11) bezeichnet, der in der Reifenradialrichtung auf der Innenseite von einem Verbindungsteil mit dem äußeren Zylinder (4) positioniert ist und die vordere und die hintere Fläche aufweist, die sich in einer Seitenansicht, aus der Reifenbreitenrichtung betrachtet, linear erstrecken,
die vordere und die hintere Fläche des horizontalen Basisabschnitts (12) in die Reifenradialrichtung zeigen,
die Dicke des horizontalen Basisabschnitts (12) in der Reifenradialrichtung allmählich von einer in der Reifenumfangsrichtung zweiten Seite aus hin zu der in der Reifenumfangsrichtung ersten Seite abnimmt,
wenn aus der Reifenbreitenrichtung betrachtet, ein Neigungswinkel (θ2) hin zu der in der Reifenumfangsrichtung ersten Seite in Bezug auf die gerade Linie (L1) einer geraden Linie (L2), die eine in der Reifenradialrichtung innere Kante (P2) der Mittellinie (CL), die durch einen in der Dickenrichtung mittleren Abschnitt des geneigten Abschnitts (13) hindurchgeht, und die in Reifenradialrichtung äußere Endkante (P1) der Mittellinie (CL), die durch einen in der Dickenrichtung mittleren Abschnitt des vertikalen Basisabschnitts (11) hindurchgeht, verbindet, größer ist als der Neigungswinkel (θ1) und 32° oder mehr und 45° oder weniger beträgt,
wenn aus der Reifenbreitenrichtung betrachtet, die Gesamtheit der Mittellinie (CL) des vertikalen Basisabschnitts (11) mit Ausnahme der in der Reifenradialrichtung äußeren Endkante (P1) auf der in der Reifenumfangsrichtung zweiten Seite von der geraden Linie (L2) aus positioniert ist, und die Gesamtheit der Mittellinie (CL) des geneigten Abschnitts (13) mit Ausnahme der in der Reifenradialrichtung inneren Endkante (P2) auf der in der Reifenumfangsrichtung ersten Seite von der geraden Linie (L2) aus positioniert ist,
wenn der luftlose Reifen (1) auf der Bodenebene (L) auf den Boden gesetzt ist, in dem geneigten Abschnitt (13) des Verbindungselements (3), wo der vertikale Basisabschnitt (11) zwischen der Bodenebene (L) und dem inneren Zylinder (6) positioniert ist, die Dicke eines Teils minimaler Belastung (13a), in dem die minimale Belastung erzeugt wird, dünner ist als die Dicke der anderen Teile,
der Teil minimaler Belastung (13a) gekrümmt ist, so dass er hin zu der in der Reifenumfangsrichtung zweiten Seite vorspringt,
der Teil minimaler Belastung (13a) in einem in der Reifenradialrichtung mittleren Bereich des geneigten Abschnitts (13) positioniert ist,
in dem geneigten Abschnitt (13) eine Widerlagerfläche (13b), die zu der in der Reifenumfangsrichtung ersten Seite zeigt, in dem äußeren Teil (13c), der in der Reifenradialrichtung außerhalb des mittleren Bereichs positioniert ist, allmählich linear hin zu der in einer Reifenumfangsrichtung ersten Seite von der Außenseite hin zu der Innenseite in der Reifenradialrichtung ausgedehnt ist, wenn aus der Reifenbreitenrichtung betrachtet,
mindestens der in der Reifenradialrichtung äußere Teil (13c) der geneigten Abschnitte (13) zwischen dem inneren Zylinder (6) und dem äußeren Zylinder (4) von dem in der Reifenradialrichtung mittigen Abschnitt in der Reifenradialrichtung auf einer äußeren Seite positioniert ist,
wenn aus der Reifenbreitenrichtung betrachtet, ein Mittelabschnitt der Widerlagerfläche (13b) des geneigten Abschnitts (13) in dem anderen Verbindungselement (3), das unter den in der Reifenumfangsrichtung benachbarten Verbindungselementen (3) auf der in der Reifenumfangsrichtung zweiten Seite positioniert ist, und ein oberer Abschnitt des ersten Verbindungsteils (14) in dem einen Verbindungselement (3), das auf der in der Reifenumfangsrichtung ersten Seite positioniert ist, in einer Richtung senkrecht zu der Widerlagerfläche (13b), zueinander zeigen,
ein Spalt zwischen den in der Reifenumfangsrichtung benachbarten Verbindungselementen (3) zwischen dem Mittelabschnitt der Widerlagerfläche (13b) des geneigten Abschnitts (13) des anderen Verbindungselements (3) und dem oberen Abschnitt des ersten Verbindungsteils (14) des einen Verbindungselements (3) minimiert ist,
wenn aus der Reifenbreitenrichtung betrachtet, der Spalt zwischen den in der Reifenumfangsrichtung benachbarten vertikalen Basisabschnitten (11) breiter ist als der Spalt zwischen den in der Reifenumfangsrichtung benachbarten geneigten Abschnitten (13),
einen ersten Verbindungsteil (14), der ein Verbindungsteil zwischen dem horizontalen Basisabschnitt (12) und dem vertikalen Basisabschnitt (11) ist und der gekrümmt ist, so dass er hin zu der in der Reifenumfangsrichtung anderen Seite vorspringt,
einen zweiten Verbindungsteil (15), der ein Verbindungsteil zwischen dem geneigten Abschnitt (13) und dem horizontalen Basisabschnitt (12) ist und der gekrümmt ist, so dass er hin zu der in der Reifenumfangsrichtung ersten Seite vorspringt,
eine Dicke des geneigten Abschnitts (13) dünner ist als eine Dicke jedes des vertikalen Basisabschnitts (11) und des horizontalen Basisabschnitts (12), und
eine Länge des geneigten Abschnitts (13) länger ist als eine Länge jedes des vertikalen Basisabschnitts (11) und die Länge des horizontalen Basisabschnitts (12), wenn aus der Reifenbreitenrichtung betrachtet,
**dadurch gekennzeichnet, dass**
sich der horizontale Basisabschnitt (12) in einer Seitenansicht, aus der Reifenbreitenrichtung betrachtet, linear erstreckt,
die Länge des horizontalen Basisabschnitts (12) dieselbe ist wie die Länge des vertikalen Basisabschnitts (11),
wenn aus der Reifenbreitenrichtung betrachtet, eine Mittellinie (CL) des vertikalen Basisabschnitts (11), die durch einen in einer Dickenrichtung mittleren Abschnitt des vertikalen Basisabschnitts (11) hindurchgeht, um 25° oder weniger hin zu der in der Reifenumfangsrichtung ersten Seite in Bezug auf eine gerade Linie (L1), die durch eine Mittelachse (O) des Reifens (1) hindurchgeht, und eine in der Reifenradialrichtung äußere Endkante (P1) der Mittellinie (CL) geneigt ist,
sich die gesamten vorderen und hinteren Flächen des vertikalen Basisabschnitts (11) mit Ausnahme eines Verbindungsteils mit dem äußeren Zylinder (4) in einer Seitenansicht aus der Reifenbreitenrichtung linear erstrecken,
der Krümmungsradius des zweiten Verbindungsteils (15) größer ist als der Krümmungsradius des ersten Verbindungsteils (14), wenn aus der Reifenbreitenrichtung betrachtet, und dadurch, dass
in dem horizontalen Basisabschnitt (12), wenn aus der Reifenbreitenrichtung betrachtet, sich mindestens eine von der Mittellinie (CL), die durch den in der Dickenrichtung mittleren Abschnitt hindurchgeht, einer Fläche, die in der Reifenradialrichtung nach innen zeigt, und einer Fläche, die in der Reifenradialrichtung nach außen zeigt, entlang der Reifenumfangsrichtung erstreckt.

2. Luftloser Reifen (1) nach Anspruch 1, wobei
die Dicke des dicksten Teils (4a) des äußeren Zylinders (4) das 1,1- bis 3,0-fache der Dicke des vertikalen Basisabschnitts (11) beträgt.

## Revendications

1. Pneu non pneumatique (1) comprenant :
un cylindre interne (6) qui peut être fixé à un essieu ;
un cylindre externe (4) qui entoure le cylindre interne (6) depuis un extérieur dans une direction radiale de pneu et présente un élément de bande de roulement (5) monté sur une surface périphérique externe de celui-ci ; et
une pluralité d'éléments de raccordement (3) disposés à intervalles égaux dans la direction circonférentielle de pneu qui raccordent une surface périphérique externe du cylindre interne (6) et une surface périphérique interne du cylindre externe (4), dans lequel
le cylindre externe (4) et l'élément de raccordement (3) sont formés pour être déformables élastiquement,
une épaisseur d'une partie la plus épaisse (4a) du cylindre externe (4) est plus épaisse qu'une épaisseur d'une partie la plus épaisse de chacun de la pluralité d'éléments de raccordement (3),
chacun de la pluralité d'éléments de raccordement (3) inclut
une portion de base verticale (11) qui s'étend vers un intérieur dans la direction radiale de pneu depuis la surface périphérique interne du cylindre externe (4),
une portion de base horizontale (12) qui s'étend le long d'une direction circonférentielle de pneu depuis une partie d'extrémité interne dans la direction radiale de pneu de la portion de base verticale (11) vers une premier côté dans la direction circonférentielle de pneu, et
une portion inclinée (13) qui s'étend graduellement vers le premier côté dans la direction circonférentielle de pneu depuis une partie d'extrémité sur le premier côté dans la direction circonférentielle de pneu de la portion de base horizontale (12) vers l'intérieur dans la direction radiale de pneu et est raccordée à la surface périphérique externe du cylindre interne (6),
chacun des éléments de raccordement (3) est :
formé dans une forme de plaque rectangulaire qui est incurvée dans l'ensemble, et les surfaces avant et arrière sont orientées dans la direction circonférentielle de pneu ou la direction radiale de pneu, et les surfaces latérales sont orientées dans la direction de largeur de pneu, et
formé à partir d'un matériau qui est apte à une déformation élastique, et raccorde la surface périphérique externe du cylindre interne (6) et la surface périphérique interne du cylindre externe (4) de manière à être relativement déplaçable élastiquement,
les surfaces avant et arrière de la portion de base verticale (11) sont orientées dans la direction circonférentielle de pneu,
dans la vue latérale, les surfaces avant et arrière des portions de base verticales (11) au niveau de la partie de raccordement avec le cylindre externe (4) s'étendent graduellement dans une direction à distance l'une de l'autre vers l'extérieur dans la direction radiale de pneu, et montrent une forme incurvée évidée dans la direction circonférentielle de pneu,
l'épaisseur de la portion de base verticale (11) dans la direction circonférentielle de pneu est la même sur une longueur totale dans la direction radiale de pneu à l'exception de la partie de raccordement avec le cylindre externe (4),
l'épaisseur de la portion de base verticale (11) est la plus épaisse dans l'élément de raccordement (3), dans lequel l'épaisseur de la portion de base verticale (11) désigne l'épaisseur d'une partie de la portion de base verticale (11) qui est positionnée à l'intérieur dans la direction radiale de pneu depuis une partie de raccordement avec le cylindre externe (4) et qui présente les surfaces avant et arrière s'étendant de manière linéaire dans une vue latérale observée depuis la direction de largeur de pneu,
les surfaces avant et arrière de la portion de base horizontale (12) sont orientées dans la direction radiale de pneu,
l'épaisseur de la portion de base horizontale (12) dans la direction radiale de pneu diminue graduellement depuis un second côté dans la direction circonférentielle de pneu vers le premier côté dans la direction circonférentielle de pneu,
lorsqu'il est observé depuis la direction de largeur de pneu, un angle d'inclinaison (θ2) vers le premier côté dans la direction circonférentielle de pneu par rapport à la ligne droite (L1) d'une ligne droite (L2) raccordant un bord interne (P2) dans la direction radiale de pneu de la ligne centrale (CL) passant à travers une portion centrale dans la direction d'épaisseur de la portion inclinée (13) et le bord d'extrémité externe (P1) dans une direction radiale de pneu de la ligne centrale (LC) passant à travers une portion centrale dans la direction d'épaisseur de la portion de base verticale (11) est plus grand que l'angle d'inclinaison (θ1) et est de 32° ou plus et de 45° ou moins,
lorsqu'il est observé depuis la direction de largeur de pneu, l'ensemble de la ligne centrale (CL) de la portion de base verticale (11) à l'exception du bord d'extrémité externe (P1) dans la direction radiale de pneu est positionné sur le second côté dans la direction circonférentielle de pneu depuis la ligne droite (L2), et l'ensemble de la ligne centrale (CL) de la portion inclinée (13) à l'exception du bord d'extrémité interne (P2) dans la direction radiale de pneu est positionné sur le premier côté dans la direction circonférentielle de pneu depuis la ligne droite (L2),
lorsque le pneu non pneumatique (1) est mis à terre sur le plan de terre (L), dans la portion inclinée (13) de l'élément de raccordement (3) où la portion de base verticale (11) est positionnée entre le plan de terre (L) et le cylindre interne (6), l'épaisseur d'une partie de contrainte minimale (13a), dans laquelle la contrainte minimale est générée, est plus fine que l'épaisseur des autres parties,
la partie de contrainte minimale (13a) est incurvée de manière à faire saillie vers le second côté dans la direction circonférentielle de pneu,
la partie de contrainte minimale (13a) est positionnée dans une région centrale de la portion inclinée (13) dans la direction radiale de pneu,
dans la partie inclinée (13), une surface de butée (13b) orientée vers le premier côté dans la direction circonférentielle de pneu dans la partie externe (13c) positionnée à l'extérieur de la région centrale dans la direction radiale de pneu est graduellement étendue de manière linéaire vers le premier côté dans une direction circonférentielle de pneu depuis l'extérieur vers l'intérieur dans la direction radiale de pneu lorsqu'elle est observée depuis la direction de largeur de pneu,
au moins la partie externe (13c) dans la direction radiale de pneu des portions inclinées (13) est positionnée à l'extérieur dans la direction radiale de pneu depuis la partie centrale dans la direction radiale de pneu entre le cylindre interne (6) et le cylindre externe (4),
lorsqu'elle est observée depuis la direction de largeur de pneu, une portion centrale de la surface de butée (13b) de la portion inclinée (13) dans l'autre élément de raccordement (3) positionné sur le second côté dans la direction circonférentielle de pneu parmi les éléments de raccordement (3) adjacents dans la direction circonférentielle de pneu, et une portion supérieure de la première partie de raccordement (14) dans l'un élément de raccordement (3) positionné sur le premier côté dans la direction circonférentielle de pneu sont orientées l'une en face de l'autre dans une direction orthogonale à la surface de butée (13b),
un espace entre les éléments de raccordement (3) adjacents dans la direction circonférentielle de pneu est minimisé entre la portion centrale de la surface de butée (13b) de la portion inclinée (13) de l'autre élément de raccordement (3) et la portion supérieure de la première partie de raccordement (14) de l'un élément de raccordement (3),
lorsqu'il est observé depuis la direction de largeur de pneu, l'espace entre les portions de base verticales (11) adjacentes dans la direction circonférentielle est plus large que l'espace entre les portions inclinées (13) adjacentes dans la direction circonférentielle de pneu,
une première partie de raccordement (14) qui est une partie de raccordement entre la portion de base horizontale (12) et la portion de base verticale (11) et qui est incurvée de manière à faire saillie vers l'autre côté dans la direction circonférentielle de pneu,
une seconde partie de raccordement (15) qui est une partie de raccordement entre la portion inclinée (13) et la portion de base horizontale (12) et qui est incurvée de manière à faire saillie vers le premier côté dans la direction circonférentielle de pneu,
une épaisseur de la portion inclinée (13) est plus fine qu'une épaisseur de chacune de la portion de base verticale (11) et de la portion de base horizontale (12), et
une longueur de la portion inclinée (13) est plus longue qu'une longueur de chacune de la portion de base verticale (11) et la longueur de la portion de base horizontale (12) lorsqu'elle est observée depuis la direction de largeur de pneu,
**caractérisé en ce que**
la portion de base horizontale (12) s'étend de manière linéaire dans une vue latérale observée depuis la direction de largeur de pneu,
la longueur de la portion de base horizontale (12) est la même que la longueur de la portion de base verticale (11),
lorsqu'elle est observée depuis la direction de largeur de pneu, une ligne centrale (CL) de la portion de base verticale (11) passant à travers une portion centrale dans une direction d'épaisseur de la portion de base verticale (11) est inclinée de 25° ou moins vers le premier côté dans la direction circonférentielle de pneu par rapport à une ligne droite (L1) passant à travers un axe central (O) du pneu (1) et un bord d'extrémité externe (P1) dans la direction radiale de pneu de la ligne centrale (CL),
la totalité des surfaces avant et arrière de la portion de base verticale (11) à l'exception d'une partie de raccordement avec le cylindre externe (4) s'étendent de manière linéaire dans une vue latérale depuis la direction de largeur de pneu,
le rayon de courbure de la seconde partie de raccordement (15) est plus grand que le rayon de courbure de la première partie de raccordement (14) lorsqu'il est observé depuis la direction de largeur de pneu, et **en ce que**
dans la portion de base horizontale (12), lorsqu'elle est observée depuis la direction de largeur de pneu, au moins une de la ligne centrale (CL) passant à travers la portion centrale dans la direction d'épaisseur, d'une surface orientée vers l'intérieur dans la direction radiale de pneu et d'une surface orientée vers l'extérieur dans la direction radiale de pneu s'étend le long de la direction circonférentielle de pneu.

2. Pneu non pneumatique (1) selon la revendication 1, dans lequel
l'épaisseur de la partie la plus épaisse (4a) du cylindre externe (4) est de 1,1 à 3,0 fois l'épaisseur de la portion de base verticale (11).
